# EUROPEAN PATENT APPLICATION

(11) **EP 2 722 138 A2**
(43) Date of publication of application: **23.04.2014**
(21) Application number: 13188699.6
(22) Date of filing: 15.10.2013
(51) Int. Cl.: B25J 9/16, G05B 19/42

(54) **Robot system and processed product producing method**

(30) Priority: 19.10.2012 JP 2012232332
(71) Applicant: Kabushiki Kaisha Yaskawa Denki, Kitakyushu-shi, Fukuoka 806-0004 (JP)
(72) Inventor: Nakahara, Yoshimitsu, Kitakyushu-shi, Fukuoka 806-0004 (JP)
(74) Representative: Viering, Jentschura & Partner Patent- und Rechtsanwälte

(57) **Abstract**

A robot system 100 includes a robot arm 13, a controller 2, an imager 15, a display device 31, and an input receiver 32. To the robot arm 13, a tool is to be mounted so as to process a workpiece. The controller 2 is configured to control the robot arm 13. The imager 15 is configured to pick up an image of the workpiece. The display device 31 is configured to display the image of the workpiece picked up by the imager 15. The input receiver 32 is configured to receive an input of a processing position where the workpiece is to be processed based on the image of the workpiece displayed on the display device 31. The controller 2 is configured to control the robot arm 13 based on the processing position received by the input receiver 32.

## Description

### BACKGROUND OF THE INVENTION

### FIELD OF THE INVENTION

The present invention relates to a robot system and a processed product producing method.

### DISCUSSION OF THE BACKGROUND

Japanese Unexamined Patent Application Publication No. 2009- 214257 discloses a robot system that includes a robot arm, an end effector, and a gripper. The end effector is mounted to the robot arm. The gripper is mounted to the end effector. In this robot system, a user holds the gripper mounted to the end effector so as to move the end effector (robot arm), and thus directly teaches a desired operation to the robot system.

The contents of Japanese Unexamined Patent Application Publication No. 2009-214257 are incorporated herein by reference in their entirety.

Unfortunately, with the robot system according to Japanese Unexamined Patent Application Publication No. 2009- 214257, the user has to move to the vicinity of the robot system and hold the gripper of the end effector (robot arm) to move the end effector. This makes teaching of the desired operation to the robot system complicated (complex).

The present invention has been made in view of the above-described circumstances, and it is one object of the present invention to provide a robot system and a processed product producing method that facilitate teaching of a desired operation.

### SUMMARY

According to one aspect of the present embodiment, a robot system includes a robot arm, a controller, an imager, a display device, and an input receiver. To the robot arm, a tool is to be mounted so as to process a workpiece. The controller is configured to control the robot arm. The imager is configured to pick up an image of the workpiece. The display device is configured to display the image of the workpiece picked up by the imager. The input receiver is configured to receive an input of a processing position where the workpiece is to be processed based on the image of the workpiece displayed on the display device. The controller is configured to control the robot arm based on the processing position received by the input receiver.

In the robot system according to the one aspect of the present embodiment, as described above, an input receiver is provided to, when a processing position of a workpiece is identified and input, receive an input of a processing position where the workpiece is to be processed based on an image of the workpiece. Also, based on the processing position of the workpiece received by the input receiver, a controller is configured to control the robot arm to process the workpiece. This saves the user the need to move to the vicinity of the robot system and hold and move the robot arm in order to directly teach a desired operation to the robot arm. Instead of moving the robot arm in order to teach a desired operation to the robot arm, the user only has to input a processing position of the workpiece into the input receiver, thus easily teaching a desired operation to the robot arm.

According to another aspect of the present embodiment, a processed product producing method includes picking up an image of a workpiece at an imager. An input of a processing position where the workpiece is to be processed based on the image of the workpiece picked up by the imager is received. The robot arm is controlled to process the workpiece based on the received processing position.

The processed product producing method according to the other aspect of the present embodiment includes receiving an input of a processing position where the workpiece is to be processed based on the image of the workpiece picked up by the imager, and controlling the robot arm to process the workpiece based on the received processing position. This processed product producing method saves the user the need to move to the vicinity of the robot system and hold and move the robot arm in order to directly teach a desired operation to the robot arm. Instead of moving the robot arm in order to teach a desired operation to the robot arm, the user only has to input a processing position of the workpiece into the input receiver, thus easily teaching a desired operation to the robot arm.

The above-described configurations facilitate teaching of a desired operation to the robot arm.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 shows a general configuration of a robot system according to a first embodiment;
FIG. 2 shows a general configuration of a robot of the robot system according to the first embodiment;
FIG. 3 shows one side of a tool mounted to a hand bracket of the robot system according to the first embodiment;
FIG. 4 shows another side of the tool shown in FIG. 3 and mounted to the hand bracket;
FIG. 5 shows a distance measuring device of the robot system according to the first embodiment;
FIG. 6 is a block diagram of the robot system according to the first embodiment;
FIG. 7 shows a display device of a PC (personal computer) of the robot system according to the first embodiment;
FIG. 8 illustrates a state in which an outline of a workpiece is input on a the display device of the PC shown in FIG. 7;
FIG. 9 illustrates a state in which a processing position of the workpiece is input on the display device of the PC shown in FIG. 7;
FIG. 10 illustrates an operation of adjusting postures of the tool based on a distance to the workpiece measured by the distance measuring device of the robot system according to the first embodiment;
FIG. 11 is a plan view of the tool shown in FIG. 10;
FIG. 12 illustrates a state in which the workpiece is being processed with the tool of the robot system according to the first embodiment;
FIG. 13 is a flowchart of an operation of a controller of the robot system according to the first embodiment;
FIG. 14 illustrates an operation of mounting an imager of the robot system according to the first embodiment;
FIG. 15 illustrates an operation of picking up an image of the workpiece by the imager of the robot system according to the first embodiment;
FIG. 16 is a side view of an imager of the robot system according to the second embodiment of the present invention, illustrating the imager's operation of picking up an image of the workpiece; and
FIG. 17 is a plan view of the imager of the robot system according to the second embodiment of the present invention, illustrating the imager's operation of picking up an image of the workpiece.

### DESCRIPTION OF THE EMBODIMENTS

The embodiments will now be described with reference to the accompanying drawings, wherein like reference numerals designate corresponding or identical elements throughout the various drawings.

### First embodiment

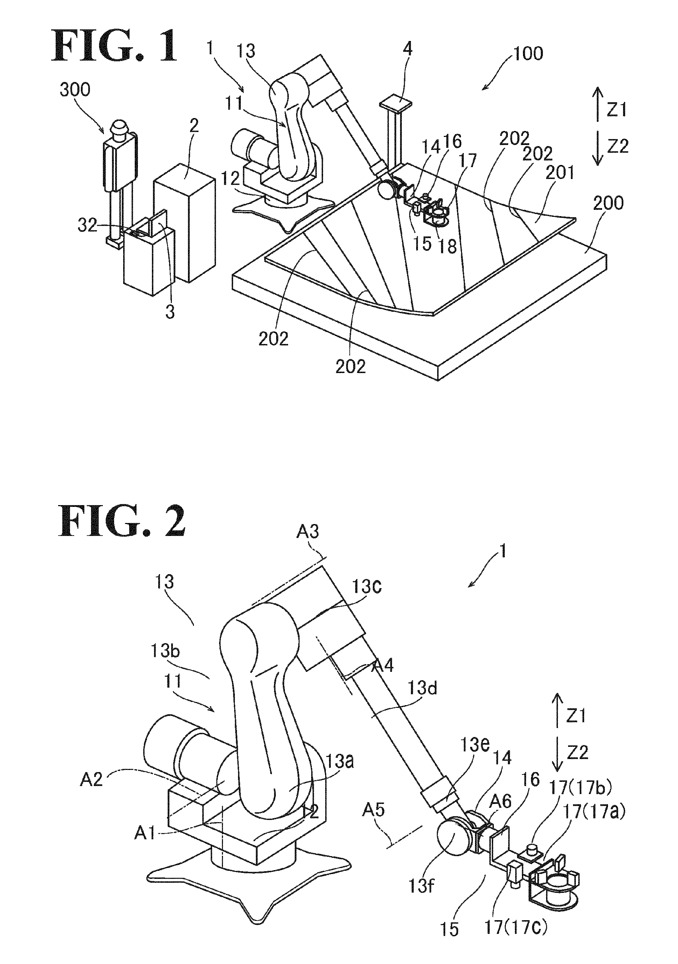

First, by referring to FIGs. 1 and 2, a configuration of a robot system 100 according to the first embodiment will be described.

As shown in FIG. 1, the robot system 100 includes a robot 1, a robot controller 2, and a personal computer (PC) 3. In the vicinity of the robot 1, a stand 4 is disposed on which to place an imager 15, described later. Also in the vicinity of the robot 1, a workpiece 201 is disposed. The workpiece 201 is placed on a workpiece bed 200. An example of the workpiece 201 is a metal plate. The metal plate is bent upward (in the arrow Z1 direction) into a curved surface. Also the workpiece 201 is provided in advance with a plurality of white lines 202, which indicate processing positions (grinding positions). The robot controller 2 is an example of the "controller". The PC 3 is an example of the "input receiver". The white lines 202 are each an example of the "processing position indicator".

As shown in FIG. 2, the robot 1 is a vertically articulated robot. The robot 1 includes a robot main body 11 and a tool 18. The tool 18 is disposed at the distal end of the robot main body 11 to process the workpiece 201. The robot main body 11 includes a base 12 and a robot arm 13 (which is made up of arm elements 13a to 13f). The base 12 is fixed on the installation surface, and the arm element 13a is coupled to the base 12 in a rotatable manner about a rotation axis A1. The arm element 13b is coupled to the arm element 13a in a rotatable manner about a rotation axis A2, which is approximately orthogonal to the rotation axis A1. The arm element 13c is coupled to the arm element 13b in a rotatable manner about a rotation axis A3, which is approximately parallel to the rotation axis A2. The arm element 13d is coupled to the arm element 13c in a rotatable manner about a rotation axis A4, which is approximately orthogonal to the rotation axis A3. The arm element 13e is coupled to the arm element 13d in a rotatable manner about a rotation axis A5, which is approximately orthogonal to the rotation axis A4. The arm element 13f is coupled to the arm element 13e in a rotatable manner about a rotation axis A6, which is approximately orthogonal to the rotation axis A5. The arm elements 13a to 13f have built-in actuators (not shown) respectively corresponding to the rotation axes Alto A6. Each actuator includes a servo motor and a reducer. Each servo motor is coupled to the robot controller 2 to be operatively controlled based on an operation command from the robot controller 2.

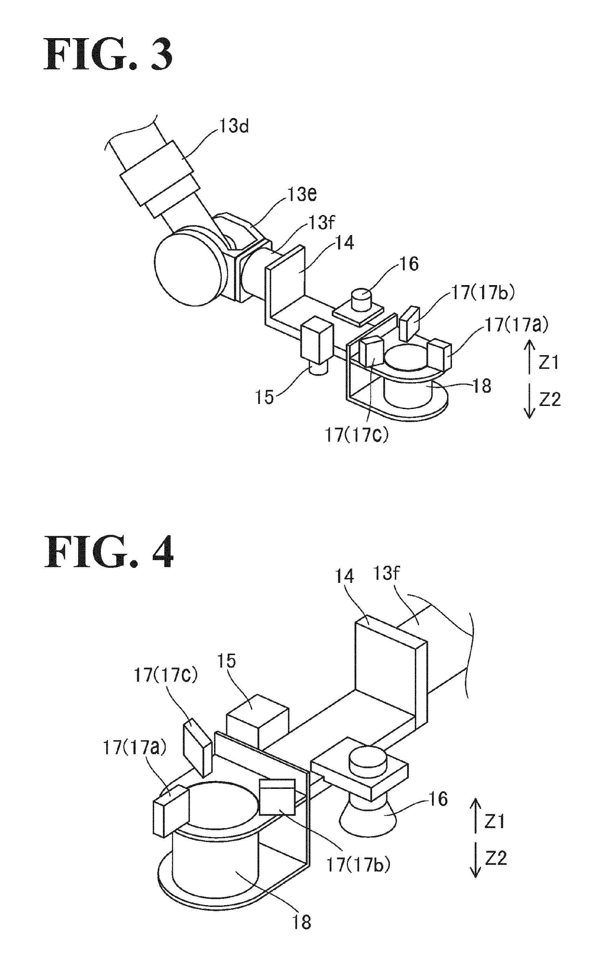

As shown in FIGs. 3 and 4, a hand bracket 14 is mounted to the forefront arm element 13f. To distal end of the hand bracket 14, the tool 18 is mounted. The hand bracket 14 has a cylindrical shape that is inserted into the hand bracket 14 when the tool 18 is mounted to the distal end of the hand bracket 14. An example of the tool 18 is a grinder to remove burs (unnecessary portions) off the surface of the workpiece 201.

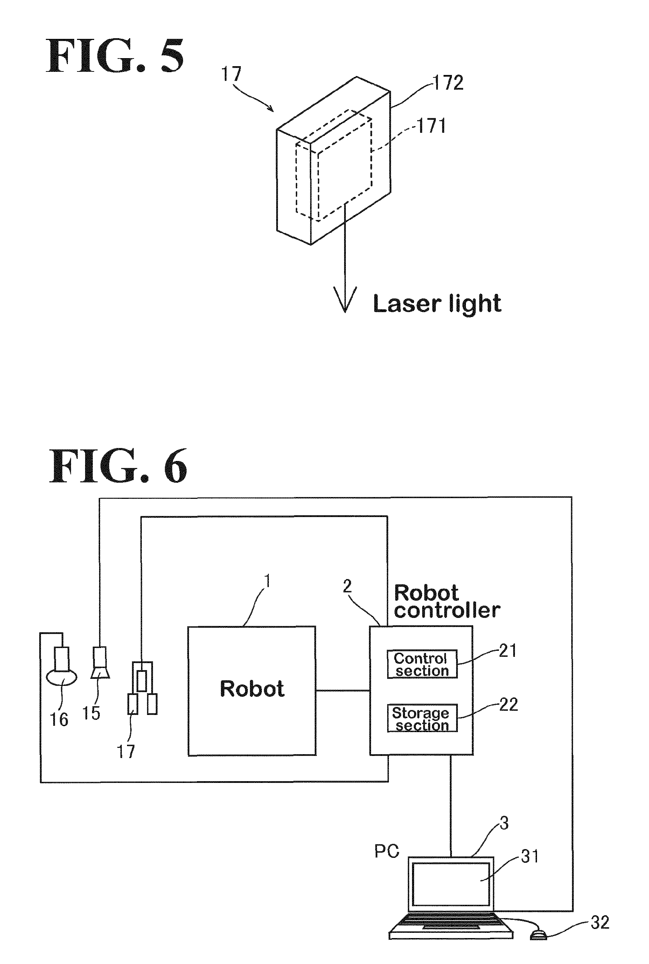

Also to the hand bracket 14, the imager 15 is mounted. The imager 15 is a camera to pick up two-dimensional images, examples including, but not limited to, a CCD (CMOS) camera. The imager 15 is coupled to the PC 3 (see FIG. 6) so that data of an image picked up by the imager 15 is taken into the PC 3. Here, in the first embodiment, the imager 15 is removably mounted to the hand bracket 14 (the robot arm 13). After the imager 15 has picked up the image of the workpiece 201 and before the tool 18 processes (grinds) the workpiece 201, the robot controller 2 controls the robot arm 13 to remove the imager 15 from the hand bracket 14. The imager 15 is removably mounted to the hand bracket 14 using, for example, an auto tool changer (ATC), not shown. Also to the hand bracket 14, an illuminator 16 is mounted to radiate light to the workpiece 201.

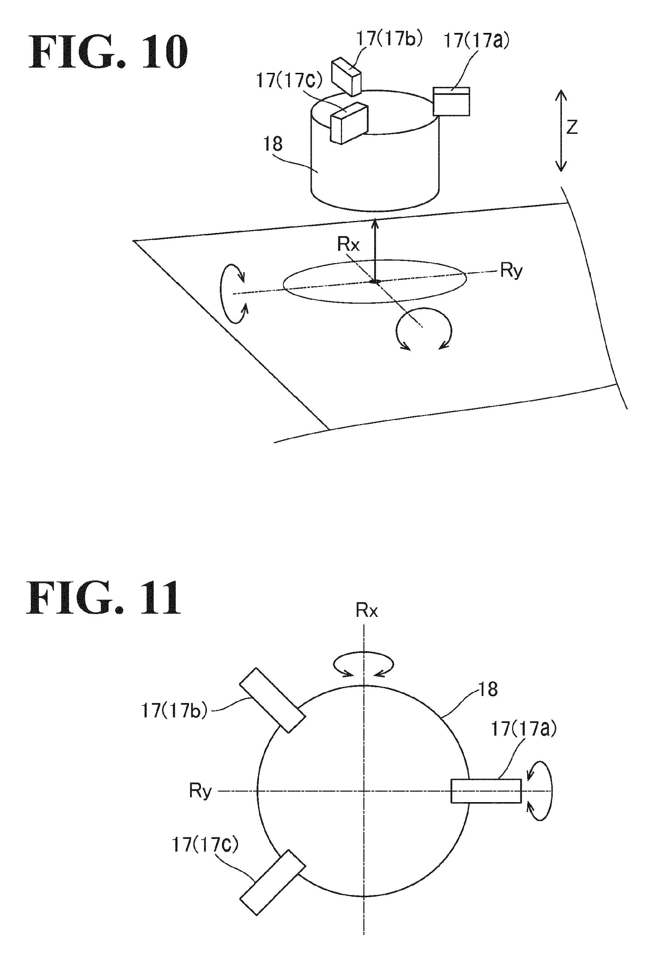

Also in the first embodiment, the hand bracket 14 includes a plurality of (in the first embodiment, three) distance measuring devices 17 (distance measuring devices 17a, 17b, and 17c) disposed as if to surround the tool 18 in plan view (see FIG. 11), so as to measure distances to the workpiece 201. The three distance measuring devices 17 are disposed on the circumference of the position of the tool 18, which is at the distal end of the hand bracket 14, and are arranged at approximately equal angular intervals (120-degree intervals) in plan view. An example of the distance measuring devices 17 is a sensor to emit laser light in the downward direction (the arrow Z2 direction) so as to measure a distance to the workpiece 201. As shown in FIG. 5, each distance measuring device 17 includes a main body 171 and a cover 172, which is disposed as if to cover the main body 171 and through which external air is supplied. Supply of external air removes foreign matter, such as dust, off the vicinity of the main body 171 of each distance measuring device 17, and ensures accurate measurement of the distance to the workpiece 201.

As shown in FIG. 6, the robot controller 2 includes a control section 21 and a storage section 22. The robot 1, the PC 3, the illuminator 16, and the three distance measuring devices 17 are coupled to the robot controller 2. The PC 3 includes a display device 31 and a mouse 32. The mouse 32 is an example of the "input section".

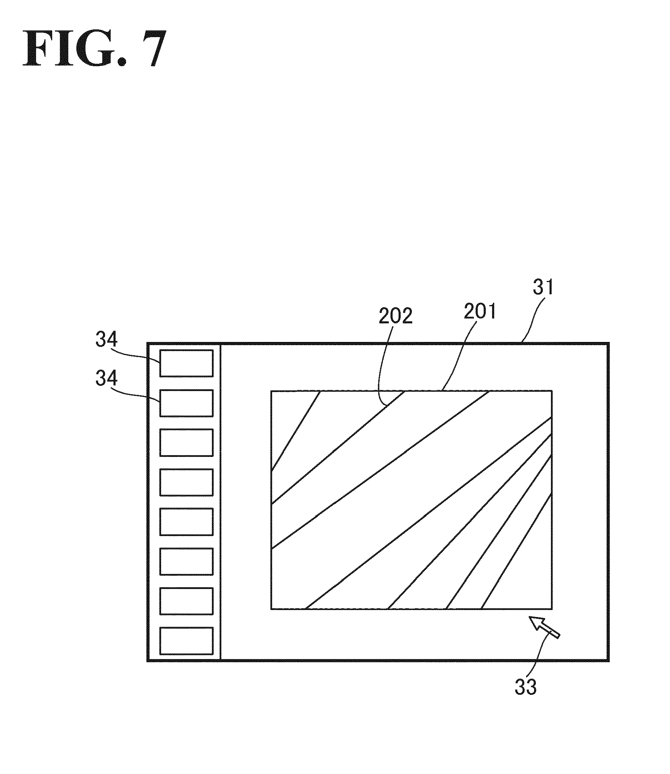

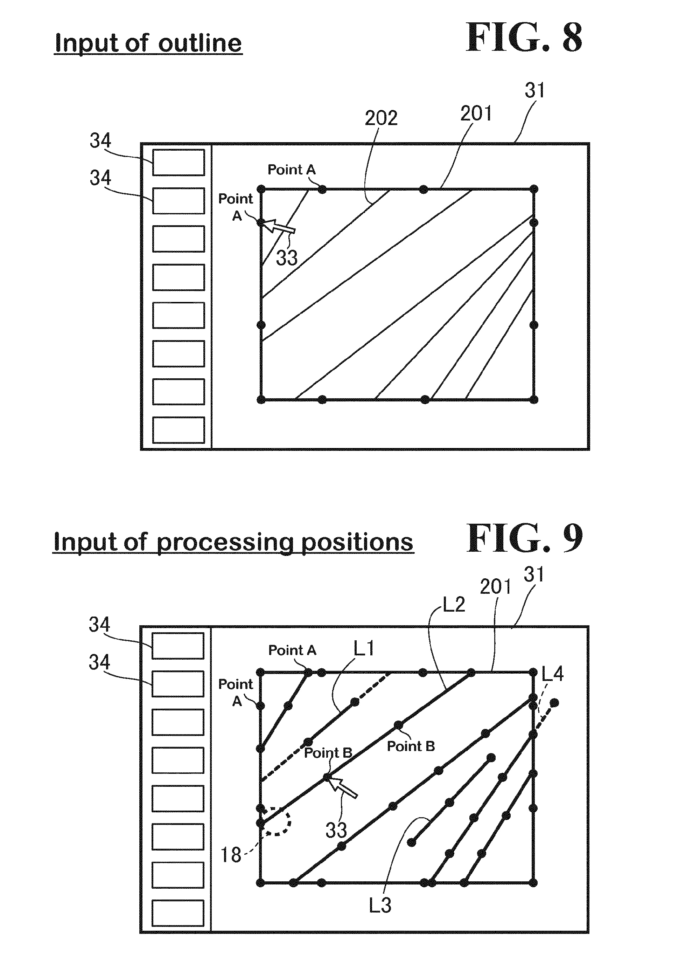

Here, in the first embodiment, as shown in FIG. 7, the display device 31 of the PC 3 displays the image of the workpiece 201 picked up by the imager 15. The PC 3 is capable of receiving an input of an outline of the workpiece 201 on the display device 31 while the image of the workpiece 201 is being displayed on the display device 31. The outline of the workpiece 201 is input by a user (operator) 300. Specifically, as shown in FIG. 8, a two-dimensional image of the workpiece 201, which has a curved surface, is displayed on the display device 31. With a pointer 33 placed over this two-dimensional image, the mouse 32 is clicked and thus the outline of the workpiece 201 is input. Also, when the mouse 32 is clicked along the outline of the workpiece 201 displayed on the display device 31, the outline of the workpiece 201 is input in a dotted form (of points A) on the display.

Also in the first embodiment, the PC 3 receives an input of a processing position (grinding position) of the workpiece 201 where the workpiece 201 is to be processed based on the image of the workpiece 201 (and on the image of the workpiece 201 displayed on the display device 31), when the processing position is identified and input. The processing position of the workpiece 201 is input by the user (operator) 300. Specifically, as shown in FIG. 9, when the mouse 32 (see FIG. 6) is clicked with the pointer 33 placed over the two-dimensional image of the curve-shaped workpiece 201 displayed on the display device 31, the processing positions (grinding position) of the workpiece 201 are input. The workpiece 201 is provided in advance with the plurality of white lines 202, which indicate the processing positions (grinding positions). When the mouse 32 is clicked along an image of a white line 202 that is displayed on the display device 31 and that indicates a processing position of the workpiece 201, the processing positions of the workpiece 201 are input in a dotted form (points B) on the display. As described later, the robot arm 13 is controlled to pass through the processing positions input in the dotted form, and thus the workpiece 201 is processed. Specifically, the robot arm 13 is controlled to move along processing lines L1 to L4.

Also in the first embodiment, through icons 34 operated using the mouse 32 (the pointer 33) for example, the PC 3 is capable of receiving a choice between: processing the workpiece 201 as far as an edge of the workpiece 201 beyond the processing positions (grinding positions) of the workpiece 201 input in the dotted form, the edge being identified from the input outline of the workpiece 201 (the processing line L1 shown in FIG. 9); and processing the workpiece 201 between the processing positions of the workpiece 201 input in the dotted form, instead of processing the workpiece 201 as far as the edge of the workpiece 201 (the processing lines L2 and L3 shown in FIG. 9). Specifically, at the processing line L1, while the input processing positions (points B) are only on the solid part of the processing line L1, all of the processing line L1 (including both the solid part and the broken part) is processed. At the processing lines L2 and L3, the workpiece 201 is processed only between the input processing positions (points B). When the processing positions of the workpiece 201 input in the dotted form protrude beyond the outline (edge) of the workpiece 201 (the processing line L4 shown in FIG. 9), the workpiece 201 is processed as far as the outline (edge) of the workpiece 201 under the control of the robot controller 2.

When the processing of the workpiece 201 is set to begin at the edge of the workpiece 201 (for example, the processing line L2 shown in FIG. 9), the robot controller 2 controls the processing to begin at a position at which the end of the tool 18 comes into contact with the outline (edge) of the workpiece 201 (that is, a position beyond which the tool 18 would protrude off the workpiece 201), as indicated by the tool 18 circled in broken line in FIG. 9. The PC 3 is also capable of receiving an input of processing speed (moving speed of the tool 18) between the processing positions of the workpiece 201 input in the dotted form (between point B and point B). The PC 3 is also capable of receiving an input of the operation of stopping the tool 18 on the processing position of the workpiece 201 (point B) for a predetermined period of time.

Here, in the first embodiment, the robot controller 2 controls the robot arm 13 to process (grind) the workpiece 201 based on the processing positions (grinding positions) of the workpiece 201 received by the PC 3. Specifically, the robot controller 2 controls the robot arm 13 to pass through the processing positions input in the dotted form (to move along the processing lines L1 to L4), so as to process the workpiece 201.

Also in the first embodiment, the robot controller 2 controls the robot arm 13 three-dimensionally based on the processing positions of the workpiece 201 received by the PC 3 on the two-dimensional image of the curve-shaped workpiece 201 displayed on the display device 31, and based on the distances to the workpiece 201 measured by the three distance measuring devices 17, so as to process the workpiece 201. Also the robot controller 2 controls the robot arm 13 such that the distances to the curve-shaped workpiece 201 measured by the three distance measuring devices 17 are approximately equal to each other, thereby adjusting the posture of the tool 18 three-dimensionally relative to the workpiece 201.

Next, by referring to FIGs. 10 and 11, the three-dimensional adjustment of the posture of the tool 18 relative to the workpiece 201 will be described.

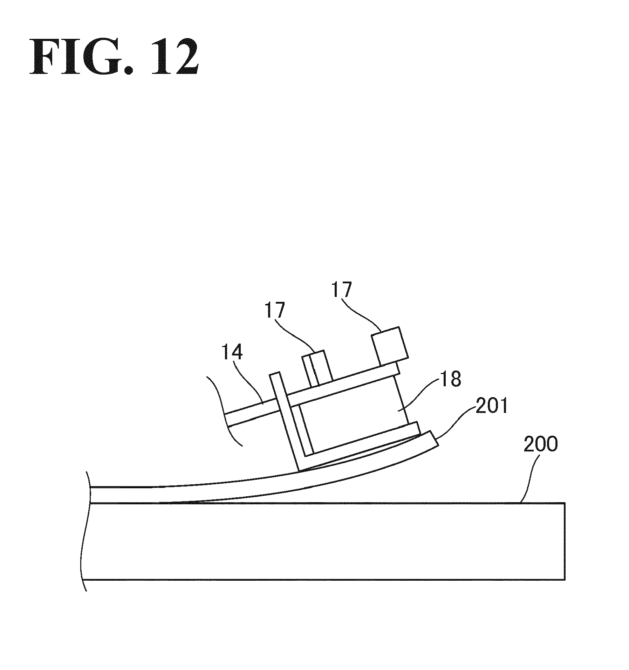

As shown in FIGs. 10 and 11, the robot arm 13 is controlled such that the distance (the distance in the Z direction) to the workpiece 201 measured by the distance measuring device 17a, which is among the three distance measuring devices 17, is approximately equal to a desired distance. In this manner, the position (height) of the tool 18 in the Z direction is adjusted. Also the posture of the tool 18 relative to the workpiece 201 is adjusted such that the distances to the workpiece 201 measured by the distance measuring devices 17a and 17b are approximately equal to one another. In this manner, the posture of the tool 18 relative to an Rx axis is adjusted. Also the posture of the tool 18 relative to the workpiece 201 is adjusted such that the distances to the workpiece 201 measured by the distance measuring devices 17b and 17c are approximately equal to one another. In this manner, the posture of the tool 18 relative to an Ry axis is adjusted. This results in a state in which the surface of the tool 18 on the workpiece 201 side and the surface of the workpiece 201 on the tool 18 side are approximately parallel to one another, as shown in FIG. 12.

Next, by referring to FIGs. 7 to 15, description will be made with regard to the input of the processing positions and to a control operation by the robot controller 2 (PC 3) of the robot system 100 associated with processing using the tool 18.

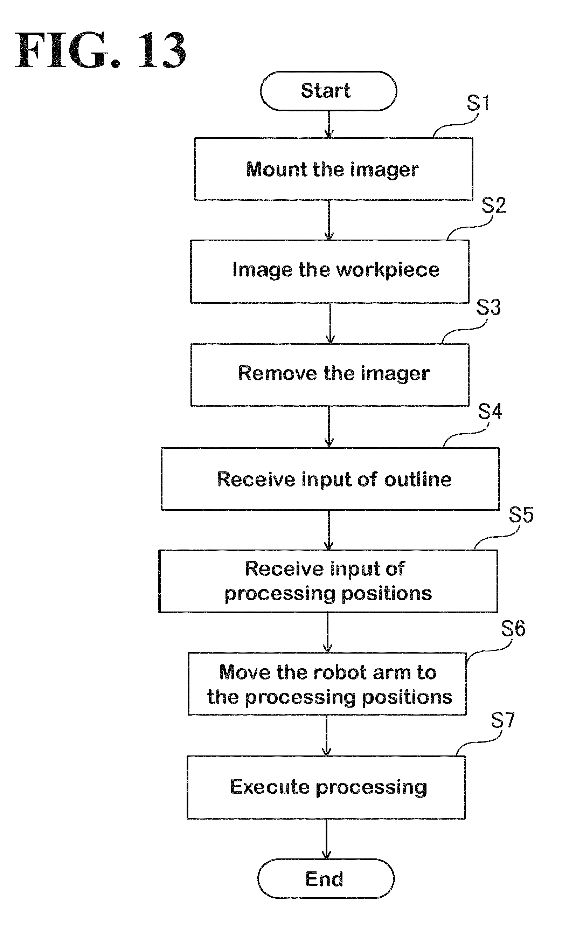

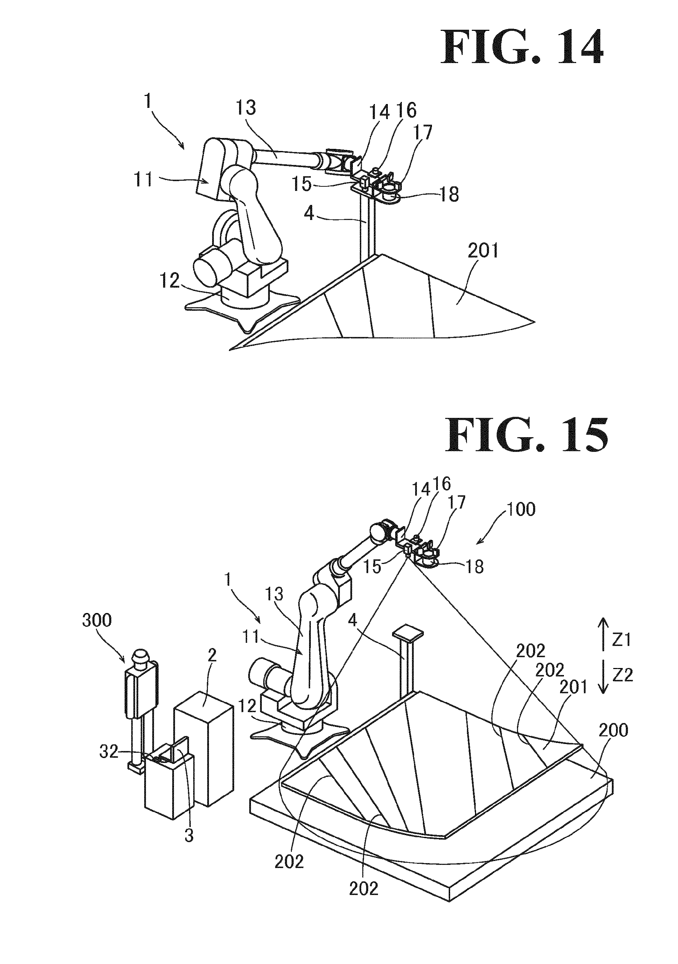

First, at step S1 shown in FIG. 13, the robot arm 13 is controlled to move to the vicinity of the stand 4 (see FIG. 14), on which the imager 15 is placed, and to mount the imager 15 to the hand bracket 14 of the robot arm 13. Next, at step S2, as shown in FIG. 15, the robot arm 13 moves to a single predetermined imaging position above the workpiece 201, and at this single imaging position, the imager 15 picks up an image of the entire workpiece 201. The workpiece 201 is formed in a curved surface, and the picked up image of the workpiece 201 is a two-dimensional image. The two-dimensional image of the workpiece 201 is displayed on the display device 31 of the PC 3 (see FIG. 7). Next, at step S3, the imager 15 mounted to the hand bracket 14 of the robot arm 13 is removed and placed onto the stand 4.

Next, at step S4, as shown in FIG. 8, the mouse 32 is clicked with the pointer 33 placed over the two-dimensional image of the curve-shaped workpiece 201 displayed on the display device 31 of the PC 3. In this manner, the input of the outline of the workpiece 201 in dotted form is received.

Next, at step S5, as shown in FIG. 9, the mouse 32 (see FIG. 6) is clicked with the pointer 33 placed over the two-dimensional image of the curve-shaped workpiece 201 displayed on the display device 31. In this manner, the input of the processing positions (grinding positions) of the workpiece 201 in dotted form is received. The processing positions of the workpiece 201 are input by a click of the mouse 32 along the images of the white lines 202, which are displayed on the display device 31 and indicate the processing positions of the workpiece 201. Also, a choice is made between: processing the workpiece 201 as far as the edge of the workpiece 201 beyond the processing positions of the workpiece 201 input in the dotted form, the edge being identified from the input outline of the workpiece 201 (for example, the processing line L1 shown in FIG. 9); and processing the workpiece 201 between the processing positions of the workpiece 201 input in the dotted form, instead of processing the workpiece 201 as far as the edge of the workpiece 201 (the processing lines L2 and L3 shown in FIG. 9). The choice is received through, for example, the icons 34 on the display using the mouse 32 (the pointer 33). Other inputs are received as necessary, including the processing speed (moving speed of the tool 18) between the processing positions of the workpiece 201 input in the dotted form, and the operation of stopping the tool 18 on the processing position of the workpiece 201 for a predetermined period of time.

Next, at step S6, based on the received processing positions (grinding positions) of the workpiece 201, the robot arm 13 moves to the vicinity of the workpiece 201. In this respect, as shown in FIGs. 10 and 11, the robot arm 13 is controlled such that the distances to the curve-shaped workpiece 201 measured by the three distance measuring devices 17 are approximately equal to each other, thereby adjusting the posture of the tool 18 three-dimensionally relative to the workpiece 201. Then, at step S7, the robot arm 13 is controlled to pass through the processing positions (the processing lines L1 to L4) input in the dotted form, thereby processing (grinding) the workpiece 201 using the tool 18. Then, the processing (grinding) of the workpiece 201 ends.

In the first embodiment, as described above, the PC 3 is provided to receive an input of the processing positions of the workpiece 201 when the processing positions of the workpiece 201 are identified and input on the display device 31 that is displaying the image of the workpiece 201. Based on the processing positions of the workpiece 201 received by the PC 3, the robot controller 2 controls the robot arm 13 to process the workpiece 201. This saves the user 300 the need to move to the vicinity of the robot system 100 and hold and move the robot arm 13 in order to directly teach a desired operation to the robot arm 13. Instead of moving the robot arm 13 in order to teach the desired operation to the robot arm 13, the user 300 only has to input the processing position of the workpiece 201 into the PC 3, thus easily teaching the desired operation to the robot arm 13.

Also in the first embodiment, as described above, the PC 3 receives the input of the processing positions of the workpiece 201 in a dotted form on the image of the workpiece 201 displayed on the display device 31. The robot controller 2 controls the robot arm 13 to pass through the processing positions input in the dotted form, so as to process the workpiece 201. This facilitates the input of the processing positions of the workpiece 201, as opposed to inputting the processing positions of the workpiece 201 as if to delineate the processing positions.

Also in the first embodiment, as described above, the workpiece 201 is provided in advance with the white lines 202 to indicate the processing positions. The robot arm 13 controls the robot controller 2, so as to process the workpiece 201, based on the processing positions of the workpiece 201 that have been input in the dotted form on the display device 31 along the images of the white lines 202 of the workpiece 201 displayed on the display. Thus, the white lines 202 facilitate recognition of the processing positions of the workpiece 201, making the input of the processing positions of the workpiece 201 easier.

Also in the first embodiment, as described above, the PC 3 receives the input of the processing positions of the workpiece 201 on the two-dimensional image of the curve-shaped workpiece 201 displayed on the display device 31. Also the robot controller 2 controls the robot arm 13 three-dimensionally, so as to process the workpiece 201, based on the processing positions of the workpiece 201 received by the PC 3 and based on the distances to the workpiece 201 measured by the plurality of distance measuring devices 17. This ensures that the robot arm 13 is controlled three-dimensionally based on the processing positions (two-dimensional processing positions) that have been received on the two-dimensional image of the workpiece 201. This, in turn, further facilitates the input of the processing positions of the workpiece 201, as opposed to the user 300 having to input the processing positions three-dimensionally.

Also in the first embodiment, as described above, the robot controller 2 controls the robot arm 13 such that the distances to the curve-shaped workpiece 201 measured by the plurality of distance measuring devices 17 are approximately equal to each other, so as to adjust the posture of the tool 18 three-dimensionally relative to the curve-shaped workpiece 201. This ensures that while the robot arm 13 is moving, the surface of the curve-shaped workpiece 201 on the tool 18 side faces the surface of the tool 18 on the workpiece 201 side with a predetermined distance maintained between the surface of the curve-shaped workpiece 201 on the tool 18 side and the surface of the tool 18 on the workpiece 201 side (which is an approximately parallel state). This, in turn, ensures efficient processing (grinding) of the workpiece 201 using the tool 18.

Also in the first embodiment, as described above, the PC 3 is configured such that the processing positions of the workpiece 201 are input by a click of the mouse 32 with the pointer 33 placed over the image of the workpiece 201 displayed on the display device 31. This enables the user 300 to easily input the processing positions of the workpiece 201 while looking at the display device 31.

Also in the first embodiment, as described above, the PC 3 is capable of receiving an input of the outline of the workpiece 201 on the display device 31 that is displaying the image of the workpiece 201. This ensures recognition of the edge of the workpiece 201, and eliminates or minimizes the tool 18 overstepping the edge of the workpiece 201 when processing the workpiece 201.

Also in the first embodiment, as described above, the PC 3 is capable of receiving a choice between: processing the workpiece 201 as far as the edge of the workpiece 201 beyond the processing positions of the workpiece 201 input in the dotted form, the edge being identified from the input outline of the workpiece 201; and processing the workpiece 201 between the processing positions of the workpiece 201 input in the dotted form, instead of processing the workpiece 201 as far as the edge of the workpiece 201. This eliminates the need for identifying the processing positions of the workpiece 201 as far as the edge of the workpiece 201 even when processing the workpiece 201 as far as the edge of the workpiece 201. This, in turn, saves the labor of inputting the processing positions of the workpiece 201. The PC 3 is also capable of receiving the choice of processing the workpiece 201 between the processing positions of the workpiece 201 input in the dotted form, instead of processing the workpiece 201 as far as the edge of the workpiece 201. This reliably inhibits the workpiece 201 from being processed beyond the processing positions of the workpiece 201.

Also in the first embodiment, as described above, the imager 15 is removably mounted to the robot arm 13, and after the imager 15 has picked up an image of the workpiece 201 and before the workpiece 201 is processed with the tool 18, the robot controller 2 controls the robot arm 13 to remove the imager 15 from the robot arm 13. This ensures that the imager 15 is already removed from the robot arm 13 at the time when the workpiece 201 is processed. This, in turn, eliminates or minimizes degraded accuracy of imaging the workpiece 201 caused by dust or like substances that can occur during processing of the workpiece 201 and make the imager 15 dirty.

### Second embodiment

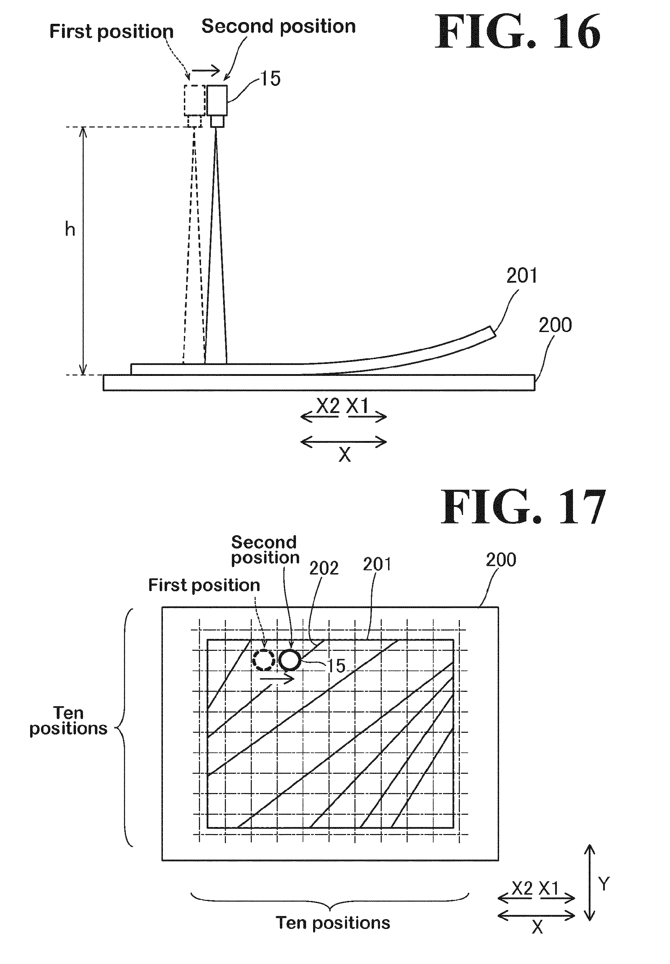

Next, by referring to FIGs. 16 and 17, a second embodiment will be described. As described below, in the second embodiment, the imager 15 picks up an image of the workpiece 201 at a plurality of imaging positions, as opposed to the first embodiment, in which the imager 15 picks up an image of the entire workpiece 201 at a single imaging position.

As shown in FIGs. 16 and 17, in the second embodiment, the robot controller 2 controls the robot arm 13 to have the imager 15 pick up images of the workpiece 201 at a plurality of imaging positions, resulting in a plurality of divided images, and to combine the plurality of divided images picked up at the plurality of imaging positions into a single image. For example, in the second embodiment, the imager 15 picks up images of the workpiece 201 at 10 imaging positions along X directions. Also the imager 15 picks up images of the workpiece 201 at 10 imaging positions along Y directions. FIG. 16 and FIG. 17 show that at a first position, the imager 15 picks up an image of the workpiece 201 (as indicated by broken line), and then the robot arm 13 moves in the arrow X1 direction to a second position, where the imager 15 picks up an image of the workpiece 201 (as indicated by solid line). That is, the workpiece 201 is imaged in a matrix of 10 columns by 10 rows. This results in 100 (= 10 × 10) divided images, and the robot controller 2 combines the 100 divided images into a single image.

The workpiece 201 is also imaged by the imager 15 at a predetermined height position (for example, at a height position h from the surface of the workpiece bed 200) and at a plurality of (100) imaging positions. Then, similarly to the first embodiment, the PC 3 receives an input of the processing positions of the workpiece 201 where the workpiece 201 is to be processed based on the combined single image (see FIG. 7) of the workpiece 201 displayed on the display device 31, when the processing positions are identified and input. The second embodiment is otherwise similar to the first embodiment.

In the second embodiment, as described above, the robot controller 2 controls the robot arm 13 to have the imager 15 pick up images of the workpiece 201 at a plurality of imaging positions, and to combine the plurality of divided images picked up at the plurality of imaging positions into a single image. Here, in the case where the imager 15 picks up an image of the entire workpiece 201 at a single imaging position (for example, a position above the center of the workpiece 201), in the vicinity of the position immediately under the imager 15, the position of the white line 202 on the picked up image indicating the processing position (grinding position) is approximately identical to the actual position (in coordinates) of the white line 202. However, at a position away from the position immediately under the imager 15 (in the vicinity of the edge of the workpiece 201), the position of the white line 202 on the picked up image is occasionally misaligned with the actual position (in coordinates) of the white line 202. In view of this, the robot controller 2 has its imager 15 pick up an image of the workpiece 201 at a plurality of imaging positions, and combines the plurality of divided images picked up at the plurality of imaging positions into a single image. This ensures that all the portions of the workpiece 201 are imaged in the vicinity of a position immediately under the imager 15, eliminating or minimizing the misalignment of the position of the white line 202 and the actual position (in coordinates) of the white line 202 on the picked up image. This ensures accurate processing of the workpiece 201 using the tool 18.

Obviously, numerous modifications and variations of the present disclosure are possible in light of the above teachings. It is therefore to be understood that within the scope of the appended claims, the present disclosure may be practiced otherwise than as specifically described herein.

While in the first and second embodiments a grinder to grind the workpiece has been exemplified as the tool with which to process the workpiece, the processing to the workpiece will not be limited to grinding. A possible example of the tool is a heating device to heat the processing position of the workpiece. The embodiments of the present invention are effective for processings involving local heating of the workpiece, since these processings generally require a human operator to adjust the heating position of the workpiece in accordance with the status of the workpiece and the workplace environment, which is a skill developed through experience. This necessitates frequent teaching of operation to the robot. The tool may also be a tool to perform welding (welding torch), cutting, or other processings along a predetermined track.

While in the first and second embodiments the processing positions of the workpiece are input in a dotted form, the processing positions of the workpiece may also be input in, for example, a linear form. In this case, the user performs the input operation as if to trace the image of the workpiece displayed on the display device of the PC.

While in the first and second embodiments white lines (processing position indicators) are provided to indicate the processing positions of the workpiece, it is also possible to, for the purpose of indicating the processing positions of the workpiece, provide other color lines than white, points, or a circle indicating a predetermined range.

While in the first and second embodiments the workpiece on its surface is provided in advance with white lines to indicate the processing positions, it is also possible for the user to identify and input the processing positions of the workpiece on the image of the workpiece displayed on the display without white lines indicating the processing positions of the workpiece.

While in the first and second embodiments three distance measuring devices are provided, it is also possible to provide two distance measuring devices, or four or more distance measuring devices.

While in the first and second embodiments the user clicks the mouse with the pointer placed over the image of the workpiece displayed on the display device of the PC so as to input the processing positions of the workpiece, the display device may be a touch panel, in which case the image of the workpiece is displayed on the touch panel of the display device and the user touches the touch panel, thereby inputting the processing positions of the workpiece.

While in the first and second embodiments the workpiece has a curved surface that is bent upward, the workpiece may also have a rough surface.

In the second embodiment, the imager picks up images of the workpiece at 10 imaging positions along the X directions. The imager also picks up images of the workpiece at 10 imaging positions along the Y directions. The imager may also pick up images of the workpiece at, for example, another plurality of imaging positions along the X directions and the Y directions, other than the 10 imaging positions.
- 2: Robot controller (controller)
- 3: Personal computer (PC) (input receiver)
- 13: Robot arm
- 15: Imager
- 17, 17a, 17b, 17c: Distance measuring device
- 18: Tool
- 31: Display device
- 32: Mouse (input section)
- 33: Pointer
- 100: Robot system
- 201: Workpiece
- 202: White line (processing position indicator)

## Claims

1. A robot system 100, **characterized by**:
a robot arm 13 to which a tool is to be mounted so as to process a workpiece;
a controller 2 configured to control the robot arm 13;
an imager 15 configured to pick up an image of the workpiece;
a display device 31 configured to display the image of the workpiece picked up by the imager 15; and
an input receiver 32 configured to receive an input of a processing position where the workpiece is to be processed based on the image of the workpiece displayed on the display device 31,
wherein the controller 2 is configured to control the robot arm 13 based on the processing position received by the input receiver 32.

2. The robot system 100 according to claim 1,
wherein the input receiver 32 is configured to receive the input of the processing position in at least one of a dotted form and a linear form on the image of the workpiece displayed on the display device 31, and
wherein the controller 2 is configured to control the robot arm 13 to pass through the processing position received by the input receiver 32.

3. The robot system 100 according to claim 2, wherein the workpiece is provided in advance with a processing position indicator indicating the processing position.

4. The robot system 100 according to any one of claims 1 to 3, further comprising a plurality of distance measuring devices 17 configured to measure distances to the workpiece,
wherein the workpiece comprises a curved surface,
wherein the input receiver 32 is configured to receive the input of the processing position on a image of the workpiece displayed on the display device 31, and
wherein the controller 2 is configured to control the robot arm 13 based on the processing position received by the input receiver 32 and based on the distance to the workpiece measured by the plurality of distance measuring devices 17.

5. The robot system 100 according to claim 4, wherein the controller 2 is configured to control the robot arm 13 such that the distances measured by the plurality of distance measuring devices 17 to the workpiece are approximately equal to each other, so as to adjust a posture of the tool relative to the workpiece.

6. The robot system 100 according to any one of claims 1 to 5,
wherein the input receiver 32 comprises an input section, separate from the display device 31, with which to identify and input the processing position of the workpiece, and
wherein the processing position of the workpiece is input by an input operation through the input section with a pointer placed over the image of the workpiece displayed on the display device 31.

7. The robot system 100 according to claim 1, wherein the input receiver 32 is configured to receive an input of an outline of the workpiece on the display device 31 displaying the image of the workpiece.

8. The robot system 100 according to claim 7, wherein the input receiver 32 is configured to receive a choice between: processing the workpiece as far as an edge of the workpiece beyond the processing positions, the edge being identified from the input outline of the workpiece; and processing the workpiece between the processing positions, instead of processing the workpiece as far as the edge of the workpiece.

9. The robot system 100 according to any one of claims 1 to 8,
wherein the imager 15 is removably mounted to the robot arm 13, and
wherein after the imager 15 has picked up the image of the workpiece and before the workpiece is processed with the tool, the controller 2 is configured to control the robot arm 13 to remove the imager 15 from the robot arm 13.

10. The robot system 100 according to any one of claims 1 to 9,
wherein the controller 2 is configured to control the robot arm 13 to make the imager 15 pick up a plurality of divided images of the workpiece at a plurality of imaging positions, and to combine the plurality of divided images picked up at the plurality of imaging positions into a single image, and
wherein the combined single image of the workpiece is to be displayed on the display device 31, and the input receiver 32 is configured to, when a processing position of the workpiece is identified and input, receive an input of the processing position based on the combined single image of the workpiece displayed on the display device 31.

11. The robot system 100 according to any one of claims 1 to 10, further comprising the tool 18 mounted to the robot arm 13.

12. The robot system 100 according to claim 11, wherein the tool 18 comprises a grinder to remove burs off the surface of the workpiece.

13. The robot system 100 according to claim 11, wherein the tool 18 comprises a heating device configured to heat the processing position.

14. A processed product producing method, **characterized by**:
picking up an image of a workpiece at an imager 15;
receiving an input of a processing position where the workpiece is to be processed based on the image of the workpiece picked up by the imager 15; and
controlling the robot arm 13 to process the workpiece based on the received processing position.
